# EUROPEAN PATENT SPECIFICATION

(11) **EP 2 224 705 B1**
(45) Date of publication and mention of the grant of the patent: **01.02.2012**
(21) Application number: 09153971.8
(22) Date of filing: 27.02.2009
(51) Int. Cl.: H04M 1/725, G10L 15/26

(54) **Mobile wireless communications device with speech to text conversion and related method**
Mobile Funkkommunikationsvorrichtung mit Sprache-Text-Umwandlung und zugehörige Verfahren
Dispositif mobile de communications sans fil doté de conversion de voix à texte et procédé correspondant

(43) Date of publication of application: 01.09.2010
(73) Proprietor: RESEARCH IN MOTION LIMITED, Waterloo, Ontario N2L 3W8 (CA)
(72) Inventor: McLean, Jennawae, Waterloo Ontario N2L 3W8 (CA)
(74) Representative: Fennell, Gareth Charles

(56) References cited:
- GB-A- 2 443 461
- US-A1- 2003 157 968
- US-A1- 2005 131 687
- US-A1- 2007 100 619

## Description

### Technical Field

The present disclosure relates to the field of wireless communications, and, more particularly, to mobile wireless communications devices with speech conversion and related methods.

### Background

Some people suffer from poor eyesight or a disability of the eyes. As a result a person may not be able to clearly see a keypad or a display of a mobile wireless communications device. Thus, operating the mobile wireless communications device may be difficult, for example, such when attempting to read the display, or manually enter text or commands.

Moreover, many motor vehicle accidents occur as a result of a driver operating a motor vehicle and mobile wireless communications device at a same time. A motor vehicle driver may easily have their eyes distracted from a roadway to read the display or type a message on the keypad.

US 2007/100619 A1 is directed to a combined predictive speech and text recognition system. The present invention combines the functionality of text input programs with speech input and recognition systems. With the present invention, a user can both manually enter text and speak desired letters, words or phrases. The system receives and analyzes the provided information and provides one or more proposals for the completion of words or phrases. This process can be repeated until an adequate match is found.

US 2003/157968 A1 is directed to personalized agent services provided in a personal messaging device, such as a cellular telephone or personal digital assistant, through services of a speech recognizer that converts speech into text and a text-to-speech synthesizer that converts text to speech. Both recognizer and synthesizer may be server-based or locally deployed within the device. The user dictates an e-mail message which is converted to text and stored. The stored text is sent back to the user as text or as synthesized speech, to allow the user to edit the message and correct transcription errors before sending as e-mail. The system includes a summarization module that prepares short summaries of incoming e-mail and voice mail. The user may access these summaries, and retrieve and organize email and voice mail using speech commands.

### Brief Description of the Drawings

FIG. 1 is a plan view of a mobile wireless communications device illustrating converted text and a proposed modification according to an example embodiment of the present disclosure.

FIG. 2 is schematic block diagram of the mobile wireless communications device of FIG. 1, according to an example embodiment.

FIG. 3 is a plan view of the mobile wireless communications device shown in FIG. 1 illustrating play back of accepted modified converted text, according to an example embodiment.

FIG. 4 is a plan view of the mobile wireless communications device and user of FIG. 3 illustrating wireless transmission of the converted text, according to an example embodiment.

FIG. 5 is a flowchart illustrating the use of the mobile wireless communications device of FIG. 1 for speed to text conversion, according to an example embodiment.

FIG. 6 is a schematic block diagram illustrating example components of a mobile wireless communications device that may be used in accordance with the present disclosure.

### Detailed Description of the Preferred Embodiments

The present description is made with reference to the accompanying drawings, in which various example embodiments are shown. However, many different example, embodiments may be used, and thus the description should not be construed as limited to the example embodiments set forth herein. Rather, these example embodiments are provided so that this disclosure will be thorough and complete. Like numbers refer to like elements throughout.

Mobile communications devices have become an integral part of society over the last two decades. Indeed, more than eighty-two percent of Americans own a mobile communications device, for example, a cell phone device. Even further, international cell phone device penetration has reached 3.3 billion units. In other words, approximately half the world's population has a cell phone device. The typical cell phone device includes an antenna, and a transceiver coupled to the antenna. The transceiver and the antenna cooperate to transmit and receive communications signals with a network infrastructure, usually maintained by a cell phone provider.

Although the first cell phone devices typically included only voice or limited short message services capabilities, the capabilities of cell phone devices have increased greatly over the last decade. More so, the typical "smart phone, "i.e. a cell phone device with advanced capabilities, rivals the processing power and memory of desktop personal computers of a decade earlier. For example, the typical smart phone is capable of running a variety of advanced programs spanning from typical word processing software to global positioning system navigation software.

As the capabilities of cell phone devices have increased, cell phone providers have gained access to new potential revenues streams. For example, cell phone providers sell multimedia content to their subscribers. More specifically, the cell phone providers typically sell ring tones and digital music files via the cell phone. The cell phone providers charge small fees for each transaction, which is separate from the typical monthly subscription fee.

Another recently developed potential revenue stream is the sale of third party applications for the cell phone devices. In other words, the cell phone providers provide a venue for third parties to sell their software to subscribers. Of course, the cell phone providers typically derive a fee from the third parties for providing the venue. A particularly advantageous venue for these third party applications is the so-cabled mobile application store platform. For example, the Application Center of Research In Motion Limited, the assignee of the present application, provides an on-device platform for third party applications. Because of the easy access to a plurality of third party applications and the capability of paying for such applications wirelessly via the cell phone subscriber's account, the mobile application store platform provides a robust consumer solution with great potential for large revenue.

A mobile wireless communications device may include a housing and a wireless transceiver carried by the housing. The mobile wireless communications device may also include at least one audio transducer carried by the housing and a controller cooperating with the wireless transceiver to perform at least one wireless communications function. The controller may also cooperate with the at least one audio transducer to convert speech input through the at least one audio transducer to converted text and determine a proposed modification for the converted text, for example. The controller may also output from the at least one audio output transducer the proposed modification for the converted text.

The proposed modification may also include a proposed grammar correction. The proposed modification may also include a proposed ambiguity resolution, for example.

The controller may also cooperate with the at least one audio transducer to accept or reject the proposed modification for the converted text based upon a further speech input. The controller may also cooperate with the at least one audio transducer to selectively play back the converted text, for example. The controller also may cooperate with the wireless transceiver to wirelessly transmit the converted text.

The mobile wireless communications device according may further include a memory. The controller may also cooperate with the memory to store the converted text, for example. The memory may also be coupled to the controller for storing text modification rules. The controller may also cooperate with the at least one audio transducer to be responsive to spoken commands.

Another aspect is directed to a method of upgrading a mobile wireless communications device that may include a housing, a wireless transceiver carried by the housing, at least one audio transducer carried by the housing, and a controller cooperating with the wireless transceiver to perform at least one wireless communications function. The method may include configuring the controller to cooperate with the at least one audio transducer to convert speech input through the at least one audio transducer to converted text, for example. The method may also include configuring the controller to cooperate with the at least one audio transducer to determine a proposed modifications for the converted text, and output from the at least one audio transducer the proposed modification for the converted text to thereby upgrade the mobile wireless communications device.

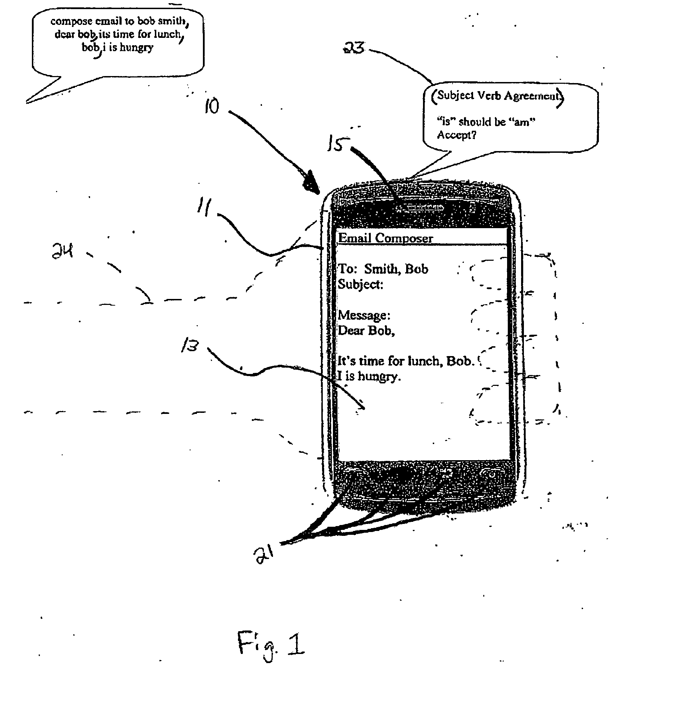

Referring initially to FIG. 1, a user **24,** for example, that may have impaired vision, is illustratively holding a mobile wireless communications device **10**. The mobile wireless communications device 10 converts speech to commands and text and determines proposed modifications for the converted text. Converting speech of a user **24** to commands and text and providing proposed modifications thereto may be particularly advantageous for reducing reliance on vision for operating the mobile wireless communications device **10**. Of course, as will be appreciated by those skilled in the art, the user **24** may not suffer from impaired vision benefit from the mobile wireless communications device **10** that converts speech to commands and text and determines proposed modifications for the converted text. Indeed, the mobile wireless communications device **10** may also be useful for other applications, such as using the mobile wireless communications device while driving a vehicle, for example.

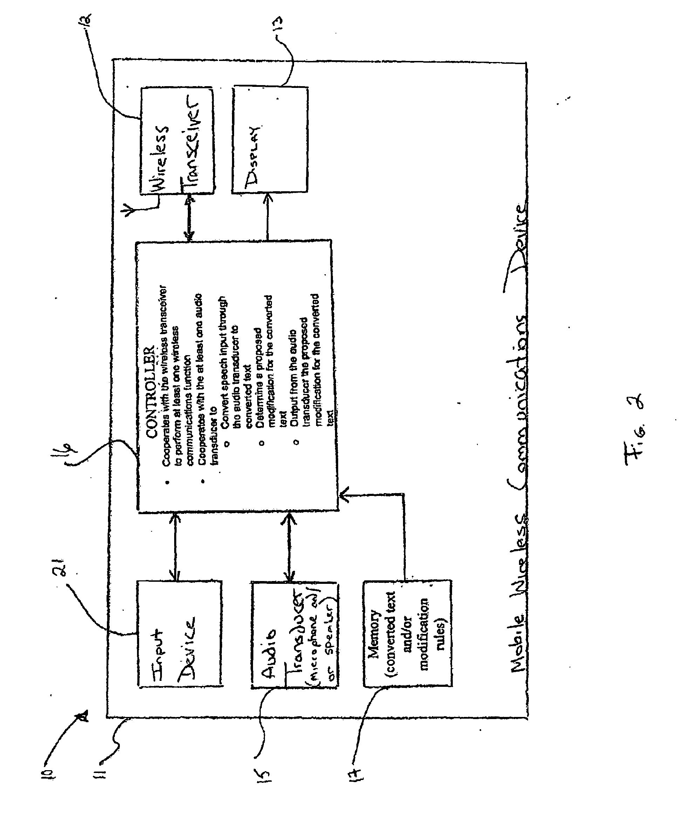

Referring now additionally to FIG. 2, the mobile wireless communications device **10** is now described in greater detail. The mobile wireless communications device **10** illustratively includes a housing **11,** a wireless transceiver **12** carried by the housing, and a display **13** carried by the housing.

The mobile wireless communications device **10** also illustratively includes an audio transducer **15** carried by the housing **11.** The audio transducer **15** may be a microphone, for example. The audio transducer **15** may also be a speaker. In some example embodiments, there may be more than one audio transducer **15 ,** for example, a microphone and speaker may be used and carried by the housing **11.**

The mobile wireless communications device **10** includes one or more input devices **21.** The input devices **21** illustratively include push buttons for cooperating with the controller **16** to selectively enable the speech conversion and proposed modification determination. In some example embodiments, the input device **21** may be an alphanumeric keypad or other input device for cooperating with the controller **16** to selectively enable the speech conversion and proposed modification determination, for example. Still further, an input device **21** may be coupled to the display **13** to accept a touching input therefrom and cooperate with the controller **16** to selectively enable the speech conversion and proposed modification determination, for example.

A controller **16** is also carried by the housing 11 and cooperates with the wireless transceiver **12** to perform at least one mobile wireless communications function. For example, the wireless transceiver **12** may be a cellular transceiver or a WiFi transceiver, for example, and may cooperate with the controller **16** to communicate data and/or voice communications. Other types of wireless transceivers and mobile wireless communications functions will be appreciated by those skilled in the art.

The controller **16** also cooperates with the audio transducer **15** to be responsive to spoken commands. A user **24** may speak a command that would otherwise correspond to one or more of the input devices **21.** For example, as illustrated, a user **24** may wish to compose an email, and thus may speak "compose email" to open the mail program to a mail composition screen. Other spoken commands may correspond to a different user program, or to a different function in a particular user program. For example, commands may include "replay, or "spend," for example. Other commands may relate to a wireless communication function, for example, "call" to initiate a phone call.

The controller 16 also may also convert speech to a corresponding contact list name for use in conjunction with a spoken command. The controller **16** may execute that command with contact information corresponding to then command. For example, "call Bob Smith" may initiate a phone call to Bob Smith based on the phone number listing of Bob Smith in the contact list. Similarly, as illustrated, "compose email to Bob Smith" may open a compose email screen with the "to" field having email contact information for Bob Smith based upon the contact list. As will be appreciated by those skilled in the art, different commands may correspond to different functions, and the controller **16** and audio transducer **15** may cooperate to selectively program spoken commands from the user **24.** It will be appreciated by those skilled in the art that the controller **16** cooperates with the audio transducer **15** to be responsive to spoken commands using known techniques, for example as may be disclosed in background.

The controller **16** also cooperates with the audio transducer **15** to convert speech input through the audio transducer to converted text **22.** As will be appreciated by those skilled in the art, the controller **16** may cooperate with the audio transducer **15** using known speech to text techniques, for example, as disclosed in DialDictate from NCH Software of Australia, "Coupling an Automatic Dictation System With a Grammar Checker" by Chanod et al. and available from http:www.aclweb.org/anthology_new/C/C92/C92-3143.pdf, ILane, available from Intelligent Mechatronic Systems Inc. of Waterloo, Ontario, Canada, (U.S. Patent No. 7,260,529 to Lengen, Nuance Voice Control available from Nuance Communications, Inc. of Burlington, Massachusetts, Dragon Naturally Speaking 10, also available from Nuance Communications, Inc. of Burlington, Massachusetts, Vlingo, available from Vlingo Corporation of Cambridge, Massachusetts, U.S. Patent No. 7,457,751 to Shostak, U.S. Patent No. 7,286,987 to Roy, and U.S. Publication No. 2007/0182595 to Ghasabian.

DialDictate from NCH Software of Australia lets one call in dictation, that is, convert speech to text and send the text via email, or a computer network. Recording, replaying, editing, and file management are controlled by pressing numbers on the telephone keypad. When a recording is completed, DialDictate sends the dictation for transcription by email, the local computer, network or via the Internet. For example, a user could dictate using a hands-free speakerphone or a cordless headset in an office, car phone, cell phone, a VoIP softphone, or even a payphone overseas.

The article entitled "Coupling an Automatic Dictation System With a Grammar Checker" by Chanod et al. and available from http:www.aclweb.org/antholvgy_ new/C/C92/C92-3143.pdf discloses a system that includes an automatic dictation system (ADS) that is coupled with a syntactic parser. A voice signal is submitted to a signal processor to extract acoustic parameters therefrom. A decoding operation determines possible spoken words from the voice signal. Grammatical analysis is performed after a decoding by using the syntactic parser to determine grammar composition of a sentence input. The ADS system is implemented on a personal computer.

Ilane, available from Intelligent Mechatronic Systems Inc. of Waterloo, Ontario, Canada, is a portable device that lets a user control his smartphone using simple voice commands when inside a vehicle. The iLane device allows a user to open, listen to, and respond to email entirely hands-free simply by speaking aloud. iLane verbally notifies the user when new emails arrive on the smartphone and reads emails out loud, on command. If a user wishes to respond to an email, the user says "replay" and composes his response by speaking aloud. lane hears the user, and sends the message to the recipient from the smartphone. Additionally, iLane allows a user to access and control other smartphone applications by voice command, including managing phone calls, SMS messages, and calendar.

U.S. Patent No. 7,260,529 to Lengen discloses a command insertion system and a method for voice recognition. More particularly, a speech recognition system operates a speech recognition application on a computer in a continuous dictation mode. A separate keypad is coupled to the computer through a USB port. The keypad includes a plurality of keys for providing command signals representative of a desired computer operation command, which override the dictation mode of the speech recognition application whenever such a command is operated. This allows the user to insert commands, such as punctuation, numerals, "next line", "next paragraph", and the like, directly from the keypad while maintaining operation of the voice recognition application in its continuous dictation mode.

Nuance Voice Control available from Nuance Communications, Inc. of Burlington, Massachusetts, is directed to a voice command system for a wireless communications device. More particularly, the voice command system allows a user to execute commands on the wireless communications device, for example, call a telephone book entry, email from contacts, including compose an emails and view the web. Punctuation is provided by spoken commands, for example "period" or "new line."

Dragon Naturally Speaking 10, also available from Nuance Communications, Inc. of Burlington, Massachusetts, is speech recognition software for a personal computer. The software allows programs to be started and documents to be created from speaking. The software inserts natural punctuation marks, i.e. periods and commas. Other punctuation needs to be spoken.

Vlingo, available from Vlingo Corporation of Cambridge, Massachusetts, is software that allows a user to speak voice commands on a BlackBerry device instead of typing. More particularly, the software allows sending of email and text messages, making phone calls, writhing a note, and opening other applications. The software learns a user's voice and improves accuracy with use. Punctuation is spoken, and capitalization is automatic after a spoken "period," Additionally, the software speaks the user's request back to the user and a user may specify the speak back voice as a male or female.

U.S. Patent No. 7,457,751 to Shostak discloses a system for improving recognition accuracy in speech recognition applications. The system includes a controlling computer that runs speech recognition software and a customer configuration database. The system also includes badges, which are wearable wireless devices that users employ to communicate with each other. Voice commands received through the badge are interpreted and a set of voice command interpretations are generated.

U.S. Patent No. 7,286,987 to Roy discloses a speech recognition system interpreting human speech received via a cell phone, for example, to improve accuracy or automatically generate punctuation for transcription and dictation. Roy categorizes words in phrases, as for example, nouns and verbs. Punctuation may be generated in the dictated speech without a speaker explicitly dictating punctuation. A response to the spoken words, for example, if a command is given, may be spoken or visual.

U.S. Publication No. 2007/0182595 to Ghasabian discloses an electronic device that enhances data entry in a mobile and fixed environment. More particularly, a user may use voice/speech to enter a desired symbol without other interaction, such as pressing a key. The system may correct, add, or replace words to provide an error-free phrase that have been entered by the user.

The concerted text **22** may be displayed on the display **13.** The controller **16** also determines a proposed modification **23** for the converted text **22.** The proposed modification **23** may be a proposed grammar correction or may be a proposed ambiguity resolution and may also be displayed on the display **13** and/or identified as an ambiguity. For example, the proposed modification **23** may be a subject-verb agreement, as illustrated in FIG, 1. The proposed modification **23** may also be a missing comma, or a missing apostrophe, for example.

As illustrated more particularly in FIG. 1, the controller **16** may cooperate with the audio transducer **15** to audibly speak the proposed modification **23** to the converted speech **22.** For example, as illustrated, an audible voice identifies the potential ambiguity or grammar to be modified. The controller **16** cooperates with the audio transducer **15** to audibly propose the modification **23** for correcting the grammar or resolving the ambiguity.

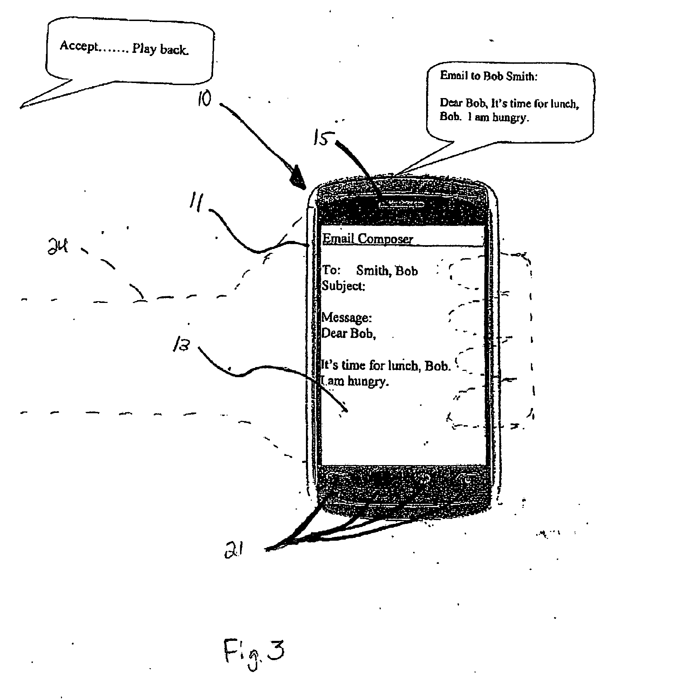

Referring now additionally to FIG. 3, the controller **16** and the audio transducer **15** cooperate to accept or reject the proposed modification **23.** For example, as illustrated in FIG. 3, the user **24** speaks "accept" or "reject" to accept or reject respectively, each proposed modification **23.** Other commands may be spoken by the user **24** to accept or reject a proposed modification **23.** Based upon the user's response, the proposed modification **23** may or may not be made in the converted text **22.** The converted text **22** including the accepted proposed modifications **23** may be displayed on the display **13.**

In some example embodiments, the proposed modification **23** may be automatically inserted into the converted text **22,** for example, periods, commas, and apostrophes may be added, and certain words may be capitalized without accepting or rejecting each proposed modification.

The controlled **16** also illustratively may cooperate with the audio transducer **15** to selectively play back the converted text **22.** For example, as illustrated more particularly in FIG. 3, the user **24** may speak a command, such as "play back." In response to the user's spoken command, the controller **16** cooperates with the audio transducer **15** to audibly play the converted text **22.** The converted text **22** played back may include accepted and/or rejected proposed modifications **22.** Still further, the text may be played back in a male or female voice and/or in different languages, as will be appreciated by those skilled in the art. Moreover, in some example embodiments, the controller **16** may also cooperate with the audio transducer **15** to audibly read or play incoming or received messages, for example, voicemail, email or short messaging service (SMS) messages.

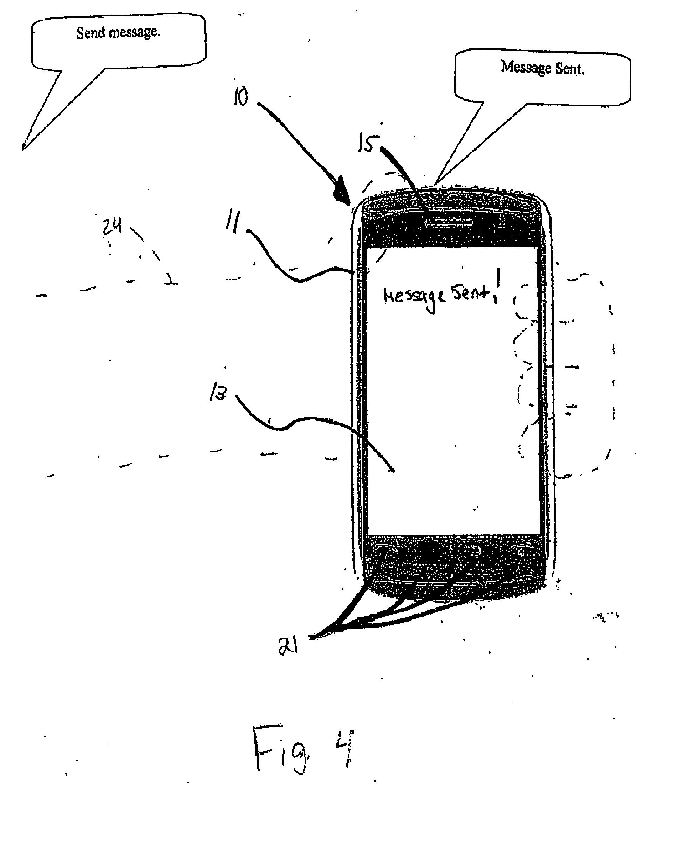

Referring now additionally to FIG. 4, after the proposed modifications in the converted text **22** have been accepted and/or rejected, the user **24** may speak the command "send," for example. The "send" command may cause the controller **16** to cooperate with the wireless transceiver **12** to wirelessly transmit the converted text **22** including accepted and/or rejected proposed modifications **23.** For example, the converted text **22** may be sent to the intended recipient, for example, Bob Smith, as illustrated.

As illustrated more particularly in FIG. 2, the mobile wireless communications device 10 illustratively includes a memory **17,** for example, an on-board/on-chip memory or a removable memory card or both. As will be appreciated by those skilled in the art, the memory **17** may store converted text and/or commands. The memory **17** may also store text modification rules. For example, the memory **17** may store spelling rules, such as a dictionary, punctuation rules, such as comma usage, and capitalization rules, such as capitalization of a proper noun. Other grammar rules, such as subject-verb agreement, may also be stored in the memory **17.** Still further, as will be appreciated by those skilled in the art, the memory **17** may store text modification rules for different languages, contacts or address book information, and voices for audible responses or play back.

The memory **17** may also store computer executable code for being executed by the controller **16.** In some example embodiments, the computer executable code may be written in Java, for example. Additionally, the computer executable code may be stored on other storage mediums, as will be appreciated by those skilled in the art.

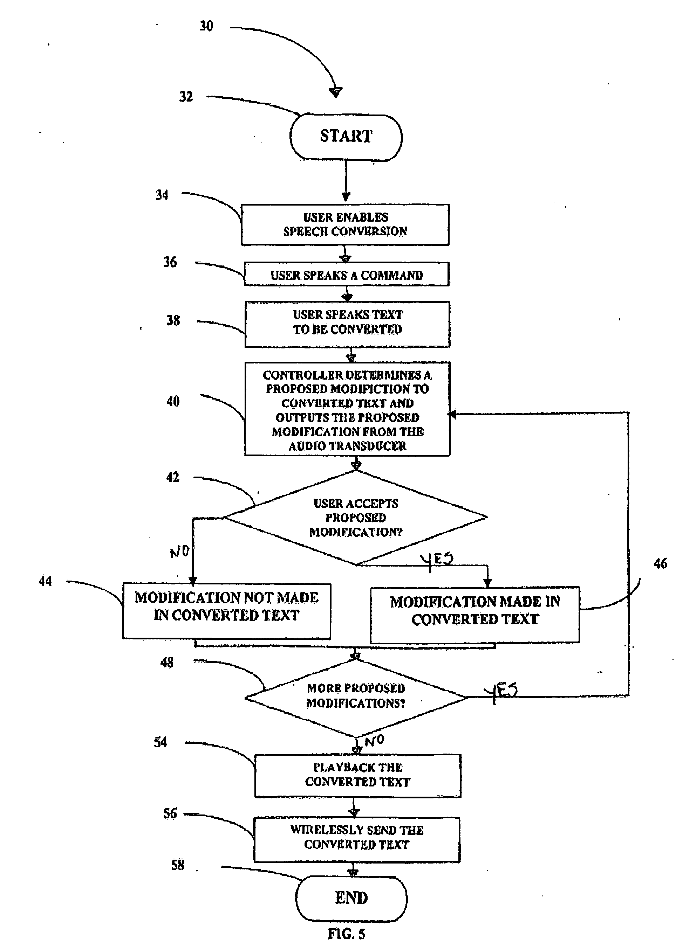

Referring now additionally to the flowchart **30** of FIG. 5, the process of using the mobile wireless communications device including speech conversion begins at Block **32.** The user **24,** at Block **34,** uses one or more of the input devices **21** to configure the controller **16** to selectively enable the conversion of speech to commands and text. Once enabled, the user **24** speaks a command (Block 36). The user **24,** at Block **38,** speaks the text to be converted. The controller **16** determines a proposed modification to the converted text **22** (Block **40**). The user **24** accepts or denies each proposed modification **23** (Block **42**). If the proposed modification **23** is accepted the proposed modification is made in the converted text **22** (Block **46**). Alternatively, if the proposed modification **23** is rejected by the user **24,** the proposed modification is not made in the converted text **22** (Block **44**). If more than one proposed modification **23** exists in the converted text (Block **48**), the user **24** is prompted to accept or reject each proposed modification. If each proposed modification **23** has been accepted or rejected, the user may initiate an audible playback of the converted text **22** at Block **54.** The converted text including the modifications may be wireless transmitted at Block **56** before ending at Block **58.**

Another aspect is directed to a method of upgrading a mobile wireless communications device **10** that includes a housing **11,** a wireless transceiver **12** carried by the housing, an audio transducer **15** carried by the housing, and a controller **16** cooperating with the wireless transceiver to perform at least one wireless communications function. The method includes configuring the controller **16** to cooperate with the at least one audio transducer **15** to convert speech input through the audio transducer to converted text **22,** for example. The method also includes configuring the controller **16** to cooperate with the audio transducer **15** to determine a proposed modification **23** for the converted text **22,** and output from the at least one audio transducer the proposed modifications for the converted text to thereby upgrade the mobile wireless communications device **10.**

Configuring the controller **16** may include accessing stored computer executable code from the memory **17,** such as a Java application program interface (API), for example. Of course, as will be appreciated by those skilled in the art, configuring the controller **16** may occur by the installation of the computer executable code into the memory **17.** For example, the controller **16** may be configured by downloading the computer executable code from a third party, or the manufacturer. The controller **16** may also be configured by receiving pushed computer executable code from the third party or the Manufacturer. Using one or more of the input devices **21** also configures the controller **16** to selectively enable the conversion of speech to commands and text and determines proposed modifications for the converted text.

As will be appreciated by those skilled in the art, the mobile wireless communications device **10** that converts speech to commands and text **22** and determines proposed modifications **23** for the converted text advantageously reduces strain on the user's eyes and fingers. Indeed, a user **24** may not have to read and type messages on the mobile wireless communications device **10.** The mobile wireless communications device **10** also may increase the user's efficiency by reducing the time taken to write, edit, and/or send messages. Still further, when driving a motor vehicle, a user **24** may not have to glance at the display **13** or use one of the input devices **21** of the mobile wireless communications device **10** to perform a communications function, such as placing a phone call or drafting an email, for example.

Example components of a hand-held mobile wireless communication device **1000** that may be used in accordance with the present disclosure are further described in the example below with reference to FIG. 6. The device, **1000** illustratively includes a housing **1200,** a keypad **1400** and an output device **1600.** The output device shown is a display **1600,** which may comprise a full graphic LCD. In some example embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some example embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system function, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mail, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device 1000 may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilises a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitter to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network 1401 via the communications subsystem **1001**.

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other example embodiments of the present disclose will come to the mind of one skilled in the art having the benefit of the teachings presented in the foregoing descriptions and the associated drawings. Therefore, it is understood that the disclosure is not to be limited to the specific example embodiments disclosed, and that modifications and example embodiments are intended to be included within the scope of the appended claims.

## Claims

1. A mobile wireless communications device (10) comprising;
a housing (11);
a wireless transceiver (12) carried by said housing (11);
at least one audio transducer (15) carried by said housing (11); and
a controller (16) cooperating with said wireless transceiver (12) to perform at least one wireless communications function;
said controller (16) also cooperating with said at least one audio transducer (15) to
convert speech input through said at least one audio transducer (15) to converted text (22),
determine a proposed modification (23) for the converted text (22), and
output from said at least one audio transducer (15) the proposed modification (23) for the converted text (22).

2. The mobile wireless communications device (10) according to Claim 1 wherein the proposed modification (23) comprises a proposed grammar correction.

3. The mobile wireless communications device (10) according to Claim 1 wherein the proposed modification (23) comprises a proposed ambiguity resolution.

4. The mobile wireless communications device (10) according to Claim 1 wherein said controller (16) also cooperates with said at least one audio transducer (15) to accept or reject the proposed modification (23) for the converted text (22) based upon a further speech input.

5. The mobile wireless communications device (10) according to Claim 1 wherein said controller (16) also cooperates with said at least one audio transducer (15) to selectively play back the converted text (22).

6. The mobile wireless communications device (10) according to Claim 1 wherein said controller (16) also cooperates with said wireless transceiver (12) to wirelessly transmit the converted text (22).

7. The mobile wireless communications device (10) according to Claim 1 further comprising a memory (17); and wherein said controller (16) also cooperates with said memory to store the converted text (22).

8. The mobile wireless communications device (10) according to Claim 1 wherein said controller (16) also cooperate with said at least one audio transducer (15) to be responsive to spoken commands.

9. The mobile wireless communications device (10) according to Claim 1 further comprising a memory (17) coupled to said controller (16) for storing text modification rules.

10. A method of upgrading a mobile wireless communications device (10) comprising a housing (11), a wireless transceiver (12) carried by the housing, at least one audio transducer (15) carried by the housing, and a controller (16) cooperating with the wireless transceiver to perform at least one wireless communications function, the method comprising:
configuring the controller (16) to cooperate with the at least one audio transducer (15) to
convert speech input through the at least one audio transducer (15) to converted text (22),
determine a proposed modification (23) for the converted text (22), and
output from the at least one audio transducer (15) the proposed modification (23) for the converted text (22) to thereby upgrade the mobile wireless communications device (10).

11. The method according to Claim 10 wherein configuring the controller (16) to determine the proposed modification (23) comprises configuring the controller (16) to determine a proposed grammar correction.

12. The method according to Claim 10 wherein configuring the controller (16) to determine the proposed modification (23) comprises configuring the controller (16) to determine a proposed ambiguity resolution.

13. The method according to Claim, 10 wherein configuring the controller (16) further comprises configuring the controller to cooperate with the at least one audio transducer (15) to accept or reject the proposed modification (23) for the converted text (22) based upon a further speech input.

14. The method according to claim 10 wherein configuring the controller (16) further comprises configuring the controller to cooperate with the at least one audio transducer (15) to selectively play back the converted text (22).

15. The method according to Claim 10 wherein configuring the controller (16) further comprises configuring the controller to cooperate with the wireless transceiver (12) to wirelessly transmit the converted text (22).

## Patentansprüche

1. Mobile drahtlose Kommunikationsvorrichtung (10), die aufweist:
ein Gehäuse (11);
einen drahtlosen Transceiver (12), der von dem Gehäuse (11) getragen wird;
zumindest einen Audio-Transducer (15), der von dem Gehäuse (11) getragen wird; und
eine Steuervorrichtung (16), die mit dem drahtlosen Transceiver (12) zusammenarbeitet, um zumindest eine drahtlose Kommunikationsfunktion durchzuführen;
wobei die Steuervorrichtung (16) auch mit dem zumindest einen Audio-Transducer (15) zusammenarbeitet zum
Konvertieren einer Spracheingabe durch den zumindest einen Audio-Transducer (15) in konvertierten Text (22),
Bestimmen einer vorgeschlagenen Modifikation (23) für den konvertierten Text (22), und
Ausgeben von dem zumindest einen Audio-Transducer (15) der vorgeschlagenen Modifikation (23) für den konvertierten Text (22).

2. Mobile drahtlose Kommunikationsvorrichtung (10) gemäß Anspruch 1, wobei die vorgeschlagene Modifikation (23) eine vorgeschlagene Grammatikkorrektur aufweist.

3. Mobile drahtlose Kommunikationsvorrichtung (10) gemäß Anspruch 1, wobei die vorgeschlagene Modifikation (23) eine vorgeschlagene Ambiguitätsauflösung aufweist.

4. Mobile drahtlose Kommunikationsvorrichtung (10) gemäß Anspruch 1, wobei die Steuervorrichtung (16) auch mit dem zumindest einen Audio-Transducer (15) zusammenarbeitet, um die vorgeschlagene Modifikation (23) für den konvertierten Text (22) basierend auf einer weiteren Spracheingabe zu akzeptieren oder abzulehnen.

5. Mobile drahtlose Kommunikationsvorrichtung (10) gemäß Anspruch 1, wobei die Steuervorrichtung (16) auch mit dem zumindest einen Audio-Transducer (15) zusammenarbeitet, um selektiv den konvertierten Text (22) wiederzugeben.

6. Mobile drahtlose Kommunikationsvorrichtung (10) gemäß Anspruch 1, wobei die Steuervorrichtung (16) auch mit dem drahtlosen Transceiver (12) zusammenarbeitet, um den konvertierten Text (22) drahtlos zu übertragen.

7. Mobile drahtlose Kommunikationsvorrichtung (10) gemäß Anspruch 1, die weiter einen Speicher (17) aufweist; und wobei die Steuervorrichtung (16) auch mit dem Speicher zusammenarbeitet, um den konvertierten Text (22) zu speichern.

8. Mobile drahtlose Kommunikationsvorrichtung (10) gemäß Anspruch 1, wobei die Steuervorrichtung (16) auch mit dem zumindest einen Audio-Transducer (15) zusammenarbeitet, um auf gesprochene Befehle zu reagieren.

9. Mobile drahtlose Kommunikationsvorrichtung (10) gemäß Anspruch 1, die weiter einen Speicher (17) aufweist, der mit der Steuervorrichtung (16) verbunden ist, zum Speichern von Textmodifikationsregeln.

10. Verfahren zum Aufrüsten (Upgrade) einer mobilen drahtlosen Kommunikationsvorrichtung (10), die ein Gehäuse (11), einen drahtlosen Transceiver (12), der von dem Gehäuse (11) getragen wird, zumindest einen Audio-Transducer (15), der von dem Gehäuse (11) getragen wird, und eine Steuervorrichtung (16) aufweist, die mit dem drahtlosen Transceiver zusammenarbeitet, um zumindest eine drahtlose Kommunikationsfunktion durchzuführen, wobei das Verfahren aufweist:
Konfigurieren der Steuervorrichtung (16) zum Zusammenarbeiten mit dem zumindest einen Audio-Transducer (15) zum
Konvertieren einer Spracheingabe durch den zumindest einen Audio-Transducer (15) in konvertierten Text (22),
Bestimmen einer vorgeschlagenen Modifikation (23) für den konvertierten Text (22), und
Ausgeben von dem zumindest einen Audio-Transducer (15) der vorgeschlagenen Modifikation (23) für den konvertierten Text (22), um **dadurch** die mobile drahtlose Kommunikationsvorrichtung (10) upzugraden.

11. Verfahren gemäß Anspruch 10, wobei das Konfigurieren der Steuervorrichtung (16), um die vorgeschlagene Modifikation (23) zu bestimmen, ein Konfigurieren der Steuervorrichtung (16) aufweist, um eine vorgeschlagene Grammatikkorrektur zu bestimmen.

12. Verfahren gemäß Anspruch 10, wobei das Konfigurieren der Steuervorrichtung (16), um die vorgeschlagene Modifikation (23) zu bestimmen, ein Konfigurieren der Steuervorrichtung (16) aufweist, um eine vorgeschlagene Ambiguitätsauflösung zu bestimmen.

13. Verfahren gemäß Anspruch 10, wobei das Konfigurieren der Steuervorrichtung (16) weiter ein Konfigurieren der Steuervorrichtung aufweist, um mit dem zumindest einen Audio-Transducer (15) zusammenzuarbeiten, um die vorgeschlagene Modifikation (23) für den konvertierten Text (22) basierend auf einer weiteren Spracheingabe zu akzeptieren oder abzulehnen.

14. Verfahren gemäß Anspruch 10, wobei das Konfigurieren der Steuervorrichtung (16) weiter ein Konfigurieren der Steuervorrichtung aufweist, um mit dem zumindest einen Audio-Transducer (15) zusammenzuarbeiten, um selektiv den konvertierten Text (22) wiederzugeben.

15. Verfahren gemäß Anspruch 10, wobei das Konfigurieren der Steuervorrichtung (16) weiter ein Konfigurieren der Steuervorrichtung aufweist, um mit dem drahtlosen Transceiver (12) zusammenzuarbeiten, um den konvertierten Text (22) drahtlos zu übertragen.

## Revendications

1. Dispositif de communication mobile sans fil (10) comprenant :
un boîtier (11) ;
un émetteur-récepteur sans fil (12) porté par ledit boîtier (11) ;
au moins un transducteur audio (15) porté par ledit boîtier (11) ; et
un contrôleur (16) qui coopère avec ledit émetteur-récepteur sans fil (12) pour réaliser au moins une fonction de communication sans fil ;
ledit contrôleur (16) coopérant également avec ledit au moins un transducteur audio (15) afin de :
convertir une entrée de parole sur ledit au moins un transducteur audio (15) en un texte converti (22) ;
déterminer une proposition de modification (23) pour le texte converti (22) ; et
produire en sortie sur ledit au moins un transducteur audio (15) la proposition de modification (23) pour le texte converti (22).

2. Dispositif de communication mobile sans fil (10) selon la revendication 1, dans lequel la proposition de modification (23) comprend une proposition de correction grammaticale.

3. Dispositif de communication mobile sans fil (10) selon la revendication 1, dans lequel la proposition de modification (23) comprend une proposition de résolution d'ambiguïté.

4. Dispositif de communication mobile sans fil (10) selon la revendication 1, dans lequel ledit contrôleur (16) coopère également avec ledit au moins un transducteur audio (15) afin d'accepter ou de rejeter la proposition de modification (23) pour le texte converti (22), sur la base d'une nouvelle entrée de parole.

5. Dispositif de communication mobile sans fil (10) selon la revendication 1, dans lequel ledit contrôleur (16) coopère également avec ledit au moins un transducteur audio (15) afin de reproduire sélectivement le texte converti (22).

6. Dispositif de communication mobile sans fil (10) selon la revendication 1, dans lequel ledit contrôleur (16) coopère également avec ledit émetteur-récepteur sans fil (12) pour émettre sans fil le texte converti (22).

7. Dispositif de communication mobile sans fil (10) selon la revendication 1, comprenant en outre une mémoire (17) et dans lequel ledit contrôleur (16) coopère également avec ladite mémoire pour stocker le texte converti (22).

8. Dispositif de communication mobile sans fil (10) selon la revendication 1, dans lequel ledit contrôleur (16) coopère également avec ledit au moins un transducteur audio (15) pour répondre aux instructions prononcées.

9. Dispositif de communication mobile sans fil (10) selon la revendication 1, comprenant en outre une mémoire (17) couplée audit contrôleur (16) pour stocker des règles de modification de texte.

10. Procédé de mise à jour d'un dispositif de communication mobile sans fil (10) comprenant un boîtier (11), un émetteur-récepteur sans fil (12) porté par le boîtier, au moins un transducteur audio (15) porté par le boîtier et un contrôleur (16) coopérant avec l'émetteur-récepteur sans fil pour réaliser au moins une fonction de communication sans fil, le procédé comprenant les étapes consistant à _{:}
configurer le contrôleur (16) en vue de coopérer avec ledit au moins un transducteur audio (15) afin de :
convertir une entrée de parole sur ledit au moins un transducteur audio (15) en un texte converti (22) ;
déterminer une proposition de modification (23) pour le texte converti (22) ; et
produire en sortie sur ledit au moins un transducteur audio (15) la proposition de modification (23) pour le texte converti (22) dans le but de mettre à jour le dispositif de communication mobile sans fil (10) de cette manière.

11. Procédé selon la revendication 10, dans lequel l'étape de configuration du contrôleur (16) pour déterminer la proposition de modification (23) comprend l'étape consistant à configurer le contrôleur (16) pour déterminer une proposition de correction grammaticale.

12. Procédé selon la revendication 10, dans lequel l'étape de configuration du contrôleur (16) pour déterminer la proposition de modification (23) comprend l'étape consistant à configurer le contrôleur (16) pour déterminer une proposition de résolution d'ambiguïté.

13. Procédé selon la revendication 10, dans lequel l'étape de configuration du contrôleur (16) comprend en outre l'étape consistant à configurer le contrôleur afin qu'il coopère avec ledit au moins un transducteur audio (15) pour accepter ou rejeter la proposition de modification (23) pour le texte converti (22), sur la base d'une nouvelle entrée de parole.

14. Procédé selon la revendication 10, dans lequel l'étape de configuration du contrôleur (16) comprend en outre l'étape consistant à configurer le contrôleur afin qu'il coopère avec ledit au moins un transducteur audio (15) pour reproduire sélectivement le texte converti (22).

15. Procédé selon la revendication 10, dans lequel l'étape de configuration du contrôleur (16) comprend en outre l'étape consistant à configurer le contrôleur pour qu'il coopère avec l'émetteur-récepteur sans fil (12) afin d'émettre par sans fil le texte converti (22).
